# EUROPEAN PATENT APPLICATION

(11) **EP 4 621 412 A1**
(43) Date of publication of application: **24.09.2025**
(21) Application number: 25164624.6
(22) Date of filing: 19.03.2025
(51) Int. Cl.: G01N 35/04

(54) **SYSTEM FOR DESTACKING CONSUMABLES IN AUTOMATES ANALYSER SYSTEMS**

(30) Priority: 19.03.2024 LU 103266
(71) Applicant: Stratec SE, 75217 Birkenfeld (DE)
(72) Inventor: Maier, Ralf, 75217 Birkenfeld (DE)
(74) Representative: Tegethoff, Sebastian

(57) **Abstract**

The present disclosure relates to a system for destacking consumables, lids, or consumables with lids comprising at least one stack of consumables, lids, or consumables with lids; a storage for the at least one stack of consumables, lids, or consumables with lids comprising a retaining mechanism configured that only the lowest and second lowest consumable of the at least one stack of consumables extend over a lower end of the storage; a movable separator comprising an upper part with separator ramps configured to separate the lowest consumable from the stack of consumables by moving its upper part between the lowest and second lowest consumable of the at least one stack of consumables; and a movable consumable holder which is arranged below the stack of consumables. A method for using the system is also disclosed.

## Description

### Field of the Disclosure

The present disclosure relates to a system for destacking consumables in automates analyser systems.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

Published European Patent application EP 2 799 886 A1 discloses a device for storing and dispensing cuvettes from a stack. The device has at least one cuvette stack receiving compartment, which may be a tube open at both ends, wherein one of the openings is provided with retaining springs, partly blocking the opening, so that the cuvette stack having been dropped into the compartment may come to rest on the retaining springs. The retaining springs are being spaced apart from the opening of the compartment by a distance that allows at least two cuvettes in the stack to stick out of the compartment opening. Furthermore, a cuvette separator with retaining spring spreaders is provided, moveable between a standby position away from the compartment and a cuvette separation position across the retaining spring opening of the compartment, and in between the two cuvettes, sticking out of the compartment.

The cuvettes are separated from the stack and fall downwards. Due to the shape of the cuvettes, falling down and further transportation is unproblematic. Other shapes of container, may cause the container to fall down in a position (e.g. at an angle) which is problematic for further handling like transportation.

Published U.S. patent US 3 645 690 A discloses a system employing individual sample capsules, each of inexpensive hollow body, open bottom construction with end tabs and cups formed in the body, a pair of horizontal rails on which the capsules are conveyed side-by-side past processing stations in stop and go fashion by the up-and-down action of the rails and to-and-fro movement of a pair of racks having teeth-engaging within the capsule body and moving the capsule in one direction when the rails are down, the teeth being free of the capsule to move in the opposite direction when the rails are up, with automatic means for dropping a capsule onto the rails, transferring a sample from a container to one of the cups in the capsule, adding reagents, filtering the reacted sample, transferring fluid from one cup to another, incubating the sample, performing a colorimetric reading and removing fluid from all cups prior to discard of the capsule, the system being essentially pneumatically operated using pneumatic logic controlled by triggers associated with the various components of the system.

Published U.S. patent US 3 795 344 A discloses a dispenser such as may be needed in conjunction with machines for vending canned food items (e.g., hot cans of soup) to dispense bowls (e.g., paper or plastic bowls) for holding the items. It holds two stacks of bowls, with each bowl in each stack nested in the next bowl below. A stack support is reciprocable between a first position holding up a first of the two stacks at the bottom and clear of the second stack, and a second position holding up the second stack and clear of the first. A first pair of wedging fingers is movable with the stack support for entry between the rim of the bottom bowl of the first stack and the next bowl above when the stack support moves from its first to its second position to wedge the bottom bowl away from the next bowl above and insure its dropping away from the first stack, which is then held up by these first wedging fingers. A second pair of wedging fingers is movable with the stack support for entry between the rim of the bottom bowl of the second stack and the next bowl above when the stack support moves from its second to its first position to wedge this bottom bowl away from the next bowl above and insure its dropping away from the second stack, which is then held up by these second wedging fingers.

Published U.S. patent US 6 881 380 B1 relates to a cup handling subsystem for an automated clinical chemistry analyzer system which includes a nestable sample cup for holding sample mixtures, a cup dispenser mechanism for holding and dispensing a supply of the cups into a sample shuttle for transporting them, and an incubator for controlling the temperature of the cup and its contents. In one embodiment, the cups include a conical lower portion and a cylindrical upper portion having a top flange, a bottom flange and a groove formed therebetween. An apparatus is provided for holding and dispensing a plurality of such cups including a supply tube for holding the cups in a stack wherein the stack has a bottom-most cup and a next-bottom-most cup located above the bottom-most cup. The apparatus also includes an escapement located at a lower end of the supply tube which includes a disk having an aperture formed therein, a first leaf attached to a top side of the disk and a second leaf attached to a bottom side of the disk. The disk is movable between a first position in which the second leaf engages the bottom flange of the bottom-most cup and a second position in which the first leaf is inserted into the groove of the next-bottom-most cup and engages the top flange of the next-bottom-most cup and in which the second leaf no longer engages the bottom flange of the bottom-most cup. In the second position, the bottom-most cup is free to fall through the aperture formed in the disk.

Published European patent EP 3 586 236 B1 teaches a dispensing device for dispensing cup lids from a stack of nested lids; the dispensing device comprises a tower magazine, which is designed to contain a stack, and a denesting unit arranged of the bottom of the tower magazine to detach the lids from the bottom of the stack and comprising a plurality of denesting rollers rotatably mounted about respective substantially vertical axes; each denesting roller has a lower shelf, a first upper shelf above the bottom shelf, and a second upper shelf above the first upper shelf; some of the denesting rollers comprise at least a first separator carried by the first upper shelf, and other denesting rollers comprise at least a second separator carried by the second upper shelf; the denesting rollers are mounted to rotate about the respective axes between a rest position, in which the stack rests on the lower shelves, and a single release position, in which the first separators engage the stack to detach the last item from the bottom of the stack; and to rotate between said rest position and a multiple release position, in which the second separators engage the stack to detach at least the last two items from the bottom of the stack.

There is a need for a container storage enabling a guided transportation of the container regarding its orientaion during separation from a stack.

### Summary of the Disclosure

The present invention provides a system for destacking consumables, lids, or consumables with lids comprising:
- at least one stack of consumables, lids, or consumables with lids;
- a storage for the at least one stack of consumables, lids, or consumables with lids comprising a retaining mechanism configured that only the lowest and second lowest consumable of the at least one stack of consumables extend over a lower end of the storage;
- a movable separator comprising an upper part with separator ramps configured to separate the lowest consumable from the stack of consumables by moving its upper part between the lowest and second lowest consumable of the at least one stack of consumables; and
- a movable consumable holder which is arranged below the stack of consumables.

In an embodiment, the storage is a carousel with loading channel.

It is further envisaged that the storage comprises a plurality of loading channel each configured for receiving a stack of consumables.

Another aspect of the system according to the present disclosure relates to the movable separator which is connected to a drive configured for moving the separator perpendicular towards the lower end of the stack of consumables.

It is further envisaged that the movable consumable holder is connected to a support which is configured for a movement in z-direction.

The support of a system according to the present disclosure comprises in an embodiment a conveyor belt for moving the consumable holder in x- and y-direction.

The consumable is a container in an embodiment.

Another object of the present disclosure relates to a method for destacking a consumable from a stack of consumables, comprising the steps of:
- Loading at least one stack of consumables, lids or consumables with lid to a storage comprising a retaining mechanism configured that only the lowest and second lowest consumable of the at least one stack of consumables extend over a lower end of the storage;
- Moving a consumable holder below the lowest consumable of the at least one stack of consumables;
- Moving a separator perpendicular towards the stack of consumables so that an upper part of the separator engages between the lowest and second lowest consumable of the stack of consumables:
   - Separating the lowest consumable from the stack of consumables;
   - Collecting the separated consumable in the consumable holder.

The method comprises in an embodiment the step of moving the consumable to a pipetting interface.

The consumable is a container in a method according to the present disclosure.

It is envisaged that a container is separated from the at least one stack and subsequently a lid is separated onto the container, wherein the lid is sealed onto the container by heating the lid.

The foregoing summary is not intended to summarize each potential embodiment or every aspect of the present disclosure.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a device according to the present disclosure in a starting position for the separation process of the stacked consumables.
FIG. 2 shows the initiation pf the separation process.
FIG. 3 shows the consumable holder in an up-position lactated directly below the stack of consumables.
FIG. 4 shows the separation of the lowest consumable from the stack by the separator.
FIG. 5 shows the separated lowest consumable in the consumable holder.
FIG. 6 shows the movement downwards of consumable holder 20 together with the separated previously lowest consumable 3.
FIG. 7 shows the interface to a pipetting device and a heating element.

### Detailed Description of the Disclosure and the Figures

The technical problem is solved by the independent claims. The dependent claims cover further specific embodiments of the invention.

The disclosure relates a holder for consumables that allows a guided handling of the consumables during automated separation. The term consumables relates to container configured for receiving a fluid and to lids for said containers. Containers and lids are configured for storing them in stacks by springs which engage in neighbouring consumbales.

The disclosure relates to a device and method for handling stackable and clipped disposable consumables comprising container like cuvettes for use in automated analysis systems. The consumables are loaded into the automated system by the user as a clipped stack and applied to a storage compartment of a separator like a carousel providing multiple channel for receiving a stack of consumables which are arranged circular around a central axis.

The present disclosure further relates to a system comprising consumables like container and lids for the container with a snap-fit mechanism which enables the containers and associated lids to be stacked together. The snap-fit mechanism of the consumable and the lid are identical so that a stack comprises container, lids, or container with lids. The stacks are stored in loading channel 5 which are placed into carousel. The carousel can be rotated so that a loading channel 5 with a container or consumable, a lid , or a container with lid is in position for separating the last stored element of the respective stack.

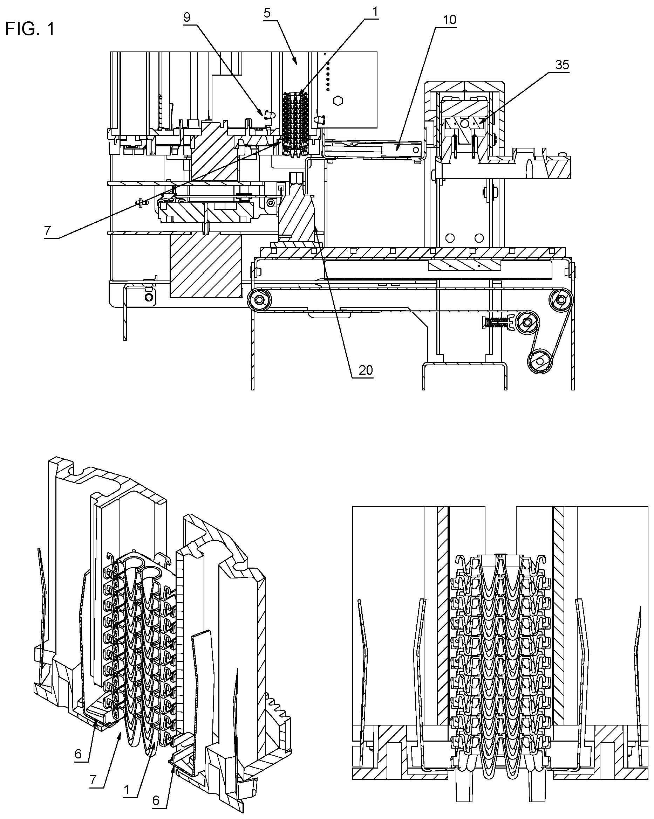

FIG. 1 shows a separation device according to the present disclosure in a starting position for the separation process of the stacked consumables 1. The stacked consumables 1 are inserted into a loading channel 5 of carousel. Stack 1 falls downwards in the loading channel 5 until stack 1 is stopped by a retaining device which comprises restraining springs 6 that are positioned outside the frame of the channel 5 and partially block the bottom opening 7 of the channel 5 so that only the last and second last consumable from the stack 1 at the bottom of the channel 5 are visible and thus accessible to a separator 10.

The number of consumables in the loading channel 5 is monitored using a light barrier 9 which is located in the lower area of the channel 5 and signals when a new stack of consumables 1 needs to be reloaded. For a better detection and for tolerance compensation, the light barrier is attached to the channel 5 at an angle.

Consumable holder 20 is in the starting position lowered and thus not in proximity to the lowest consumable of stack 1.

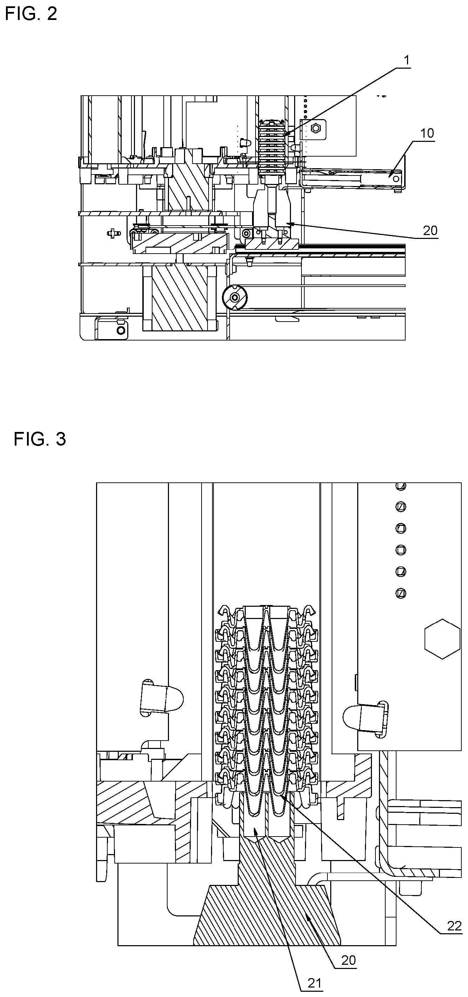

FIG. 2 shows the initiation of the separation process. Consumable holder 20 moves upwards by lifting the support to which it is connected and which may include a conveyor belt. In the so-called "up" position, the consumable holder 20 is located directly below the lowest consumable 3 of the stack of consumables 1. The separator 10 is still in its starting position.

The consumable holder 20 has corresponding recesses 21 to accommodate a consumable. If the consumable holder is in the "up" position, the lower part of the cavities 22 of the lowest consumable 3 are already positioned above recesses 21 of the consumable holder 20 (comp. FIG. 3).

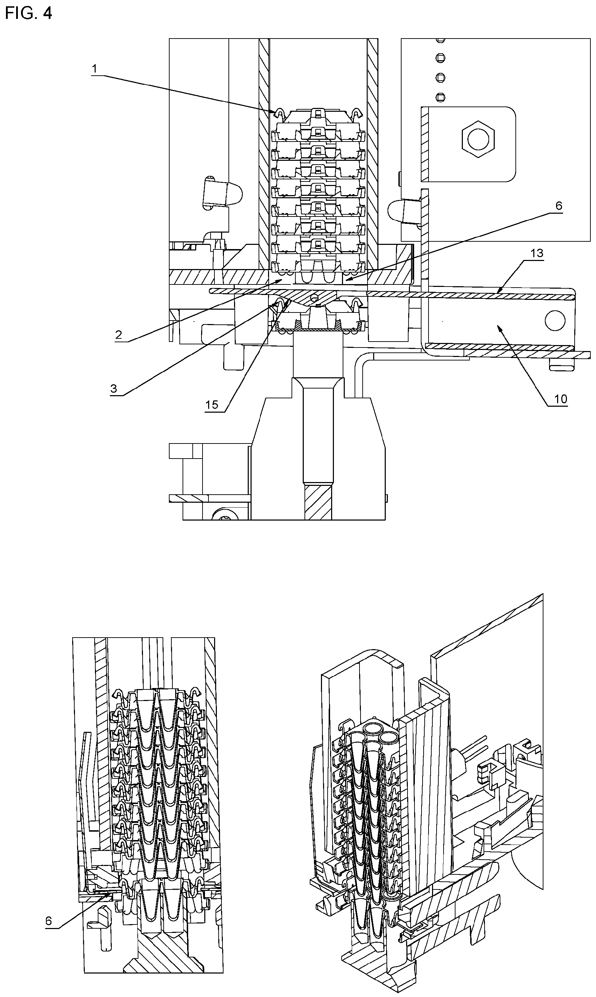

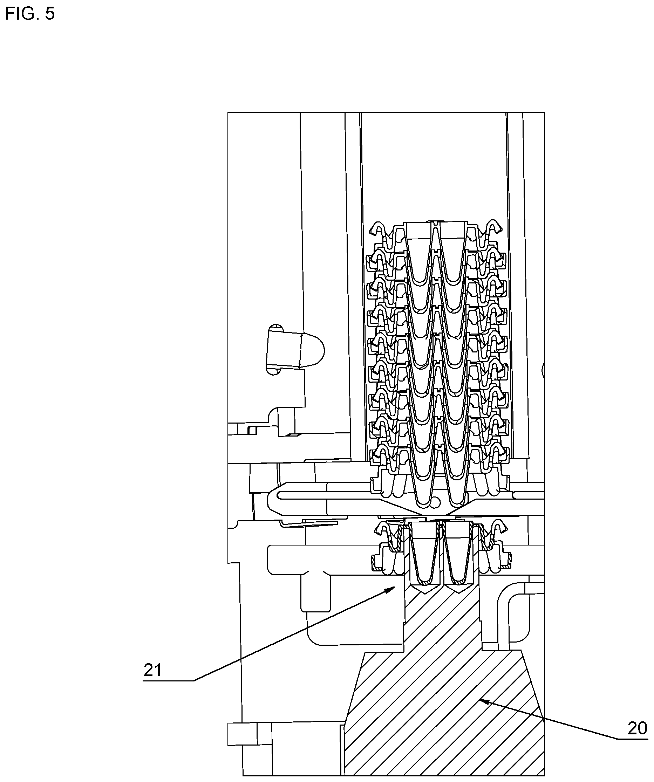

FIG. 4 shows the separation of the lowest consumable 3 from the stack 1 by the separator 10. For separation, the separator 10 moves from its parking position towards the stack of consumables 1. The upper part 13 of the separator 10 moves into a gap 2 between the lowest consumable 3 and second last consumable. The retaining springs 6 of the lowest consumable 3 are pushed to the side so that the lowest consumable 3 will be separated from the stack 1 which then lies on the upper part 13 of the separator 10. As the separator continues to move, separation ramp 15 pushes the lowest consumable 3 away from the stack 1 so that the lowest consumable 3 is released from the stack 1 and falls the short distance into recess 21 of consumable holder 20 (comp. FIG. 5).

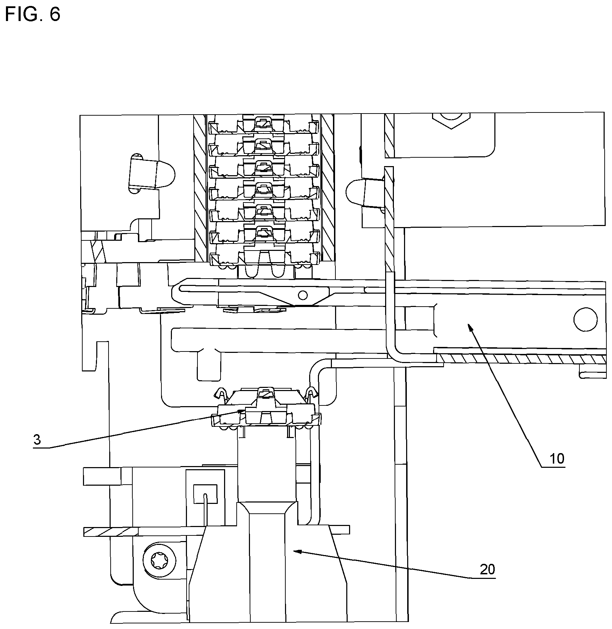

FIG. 6 shows the downwards movement of consumable holder 20 together with the separated previously lowest consumable 3. The separated consumable can now be processed further.

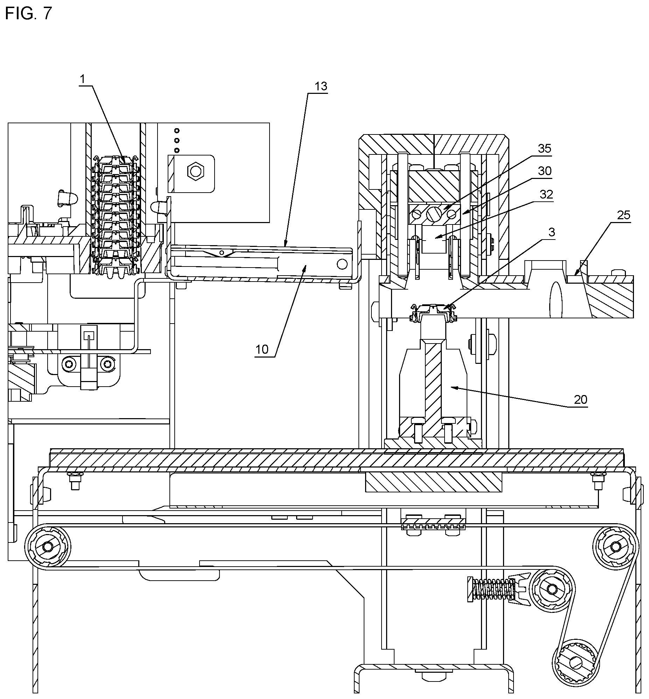

FIG. 7 shows the movement of the consumable holder 20 to one side so that the separated consumable can be used for further processing. The separator 10 moves away from the stack of consumables 1 to its starting position and the upper part 13 of the separator 10 moves away from the stack of consumables 1 so that the retaining device holds the stack of consumables 1 again.

The separated last consumable can be further processed by the consumable holder 20. The consumable is moved to a pipetting position 25 by the consumable holder 20. The consumable or container can be filled with a liquid like a sample or reagent. The pipetting position 25 represents a defined position for the pipettor as well as for a gripper (both not shown).

The liquid-filled consumable 3 is moved by the consumable holder 20 below a stack of lids so that a lid can be separated from the stack as previously described for a consumable. The lid is positioned onto the liquid-filled container or consumable.

The consumable holder 20 moves the liquid-filled consumable 3 with lid to a heater 30 (comp. FIG. 7). The heater 30 comprises in its upper part a heating element 35 with sensors (not shown) and in its lower part a pistil 32 which applies a force onto a lid for sealing it to the container.

The sealed liquid-filled consumable 3 is moved to the pipetting position, where a gripper (not shown) can remove the sealed liquid-filled consumable from the system.

The advantageous of a device according to the present disclosure can be summarised as follows:
- Guided separation using a consumable holder.
- Handling of consumable and lid possible.
- Easy handling of stacked cuvettes possible.
- Less complicated mechanical hardware required.
- Compact design, minimal space needed in system.
- Less storage room for consumables like cuvettes needed during transport.
- Reduced storage space for consumables in system required.
- Consumables are protected against damage in loading channel.

Alternative designs relate to aligning the consumables during separation of the consumable, the consumable may rest on the consumable holder at an angle despite the low drop height. To align the consumable for the rest of the process, the consumable holder moves upwards and presses the consumable against the separation ramps.

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

### Reference Numerals

- 1: consumable stack
- 2: gap between last and second last consumable
- 3: last consumable
- 4: cavities consumable
- 5: loading channel
- 6: retaining springs
- 7: bottom opening
- 9: light barrier
- 10: separator
- 13: upper part separator
- 15: separation ramps
- 20: consumable holder
- 21: recess consumable holder
- 24: housing
- 25: pipetting position
- 30: heater
- 32: pistil
- 35: heating element

## Claims

1. A system for destacking consumables, lids, or consumables with lids comprising:
- at least one stack of consumables, lids, or consumables with lids;
- a storage for the at least one stack of consumables, lids, or consumables with lids comprising a retaining mechanism configured that only the lowest and second lowest consumable of the at least one stack of consumables extend over a lower end of the storage;
- a movable separator comprising an upper part with separator ramps configured to separate the lowest consumable from the stack of consumables by moving its upper part between the lowest and second lowest consumable of the at least one stack of consumables; and
- a movable consumable holder which is arranged below the stack of consumables.

2. The system of claim 1, wherein the storage is a carousel with loading channel.

3. The system of claim 1 or 2, wherein the storage comprises a plurality of loading channel each configured for receiving a stack of consumables.

4. The system of any one of claims 1 to 3, wherein the movable separator is connected to a drive configured for moving the separator perpendicular towards the lower end of the stack of consumables.

5. The system of any one of claims 1 to 4, wherein the movable consumable holder is connected to a support which is configured for a movement in z-direction.

6. The system of claim 5, wherein the support comprises a conveyor belt for moving the consumable holder in x- and y-direction.

7. The system of any one of claims 1 to 6, wherein the consumable is a container.

8. A method for destacking a consumable from a stack of consumables, comprising the steps of:
- Loading at least one stack of consumables to a storage comprising a retaining mechanism configured that only the lowest and second lowest consumable of the at least one stack of consumables extend over a lower end of the storage;
- Moving a consumable holder below the lowest consumable of the at least one stack of consumables;
- Moving a separator perpendicular towards the stack of consumables so that an upper part of the separator engages between the lowest and second lowest consumable of the stack of consumables:
- Separating the lowest consumable from the stack of consumables;
- Collecting the separated consumable in the consumable holder.

9. The method of claim 8, comprising the step of moving the consumable to a pipetting interface.

10. The method of claim 8 or 9, wherein the consumable is a container, a cuvette, or a lid for a container.

11. The method of any one of claims 8 to 10, wherein a container is separated from the at least one stack and subsequently a lid is separated onto the container.

12. The method of claim 11, wherein the lid is sealed onto the container by heating the lid.
